# EUROPÄISCHE PATENTSCHRIFT

(11) **EP 2 857 815 B1**
(45) Veröffentlichungstag und Bekanntmachung des Hinweises auf die Patenterteilung: **07.09.2016**
(21) Anmeldenummer: 14184978.6
(22) Anmeldetag: 16.09.2014
(51) Int. Cl.: G01K 1/14, G01K 11/32

(54) **Vorrichtung und Verfahren für die Überwachung einer Reaktoroberfläche**
Method and device for monitoring the surface of a reactor
Dispositif et procédé pour la surveillance d'une surface de réacteur

(30) Priorität: 01.10.2013 DE 102013110859
(43) Veröffentlichungstag der Anmeldung: 08.04.2015
(73) Patentinhaber: LIOS Technology GmbH, 51063 Köln (DE)
(72) Erfinder: Dr. Hill, Wieland, 51519 Odenthal (DE); Kübler, Jochen, 51061 Köln (DE)
(74) Vertreter: Graefe, Jörg

(56) Entgegenhaltungen:
- EP-A1- 2 172 619
- WO-A1-2013/011130
- US-A1- 2006 115 204
- US-A1- 2009 123 110

## Beschreibung

Die vorliegende Erfindung betrifft eine Vorrichtung für die Überwachung einer Reaktoroberfläche gemäß dem Oberbegriff des Anspruchs 1.

Definitionen: Wenn im Folgenden die Begriffe Licht, optische Strahlung oder optisches Signal verwendet werden, ist damit elektromagnetische Strahlung im optischen Spektralbereich, insbesondere vom XUV bis zum FIR, gemeint. Entsprechend sollen im Rahmen dieser Anmeldung ein Lichtwellenleiter oder eine Lichtleitfaser als Übertragungsmedien für elektromagnetische Strahlung im optischen Spektralbereich dienen.

Industrielle Reaktoren weisen mitunter große, irregulär geformte Oberflächen auf, für die eine Überwachung beispielsweise von Temperatur oder Dehnung gewünscht wird. Punktsensoren erscheinen wegen der hohen erforderlichen Stückzahlen für eine Flächenüberwachung und des damit verbundenen hohen Installations- und Vernetzungsaufwands ungeeignet. Faseroptische Systeme zur verteilten Messung der interessierenden Größen wie beispielsweise DTS - Systeme (Distributed Temperature Sensing) können eine große Zahl von Messpunkten entlang einer Glasfaser beziehungsweise eines faseroptischen Sensorkabels messen und sind beispielsweise bei spiral- oder mäanderförmiger Verlegung des Sensorkabels auf der Oberfläche - gut geeignet, Flächen zu überwachen.

Aus der US2006/0115204 A1 ist eine Vorrichtung der eingangs genannten Art bekannt. Dabei werden externe Referenzspulen und ein Double-ended-Messmodus verwendet. Die Reaktorüberwachung ist in der Regel eine sicherheitsrelevante Aufgabe. Daher ist eine hohe Ausfallsicherheit essentiell. In der US2006/0115204 A1 wurde zwar bereits die Double-ended-Messung zur Erhöhung der Ausfallsicherheit vorgeschlagen. Diese reicht jedoch im Falle eines Faserbruchs nicht aus, um die gesamte Reaktoroberfläche kontinuierlich zu überwachen, da in der Nähe der Bruchstelle Störungen entstehen, die eine einwandfreie Messung verhindern. Außerdem wird keine Vorsorge für den Ausfall der Auswerteeinheit getroffen.

Es ist weiterhin notwendig, das Sensorkabel geeignet an der Reaktoroberfläche anzubringen. Die bekannten Befestigungssysteme sind nicht immer einsetzbar, weil beispielsweise die thermischen Ausdehnungen der Reaktormaterialien und der für die Befestigung verwendeten Materialien unterschiedlich sind. Weiterhin sind die Befestigungsmaterialien häufig unter rauen Umgebungsbedingungen wie hoher Temperatur oder Feuchte nicht dauerhaft beständig. Es besteht weiterhin die Möglichkeit, dass keine Bolzen oder andere Befestigungselemente am Reaktor vorhanden sind oder keine derartigen Elemente angebracht werden dürfen, weil beispielsweise das Bohren oder Schweißen an geprüften Druckbehältern untersagt ist. Weiterhin sind viele Befestigungssysteme nicht für die Herstellung eines thermischen Kontakts zwischen Sensorkabel und Reaktoroberfläche geeignet, was beispielsweise für Spannvorrichtungen an irregulären, insbesondere konkaven, Oberflächen zutrifft. Häufig ist auch die Verlegung des Sensorkabels mit bekannten Befestigungssystemen zu aufwändig.

Aus der EP 2 172 619 A1 ist eine Vorrichtung zur Anbringung einer Lichtleitfaser an einem Rohr bekannt. Die darin beschriebene Vorrichtung umfasst ein flexibles Band, in dem eine oder mehrere Lichtleitfasern angeordnet sein können. Das Band kann beispielsweise mit Hilfe einer Klebeschicht oder mit Hilfe einer magnetischen Schicht an einem Rohr befestigt werden.

Die WO 2013/011130 A1 offenbart eine Leitung, die in ein Bohrloch einbringbar ist. Die Leitung umfasst beispielsweise einen Lichtleitleiter für eine Informationsübertragung. Die äußere Hülle der Leitung ist mit magnetisierten Teilchen versehen, so dass die Leitung von der inneren metallischen Begrenzung des Bohrlochs angezogen wird und an dieser haftet. Dadurch kann weitgehend verhindert werden, dass die Leitung von durch das Bohrloch strömenden Flüssigkeiten beschädigt wird.

Das der vorliegenden Erfindung zugrunde liegende Problem ist die Schaffung einer Vorrichtung der eingangs genannten Art, die die Anbringung des Sensorkabels an der Reaktoroberfläche vereinfacht oder auch unter widrigen Bedingungen ermöglicht.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Vorrichtung magnetische Haltemittel für die Anbringung des mindestens einen Sensorkabels an der Reaktoroberfläche umfasst, wobei die Haltemittel auf ihrer im Betrieb der Vorrichtung der Reaktoroberfläche zugewandten Seite einen Schlitz für die Aufnahme des mindestens einen Sensorkabels aufweisen. Dadurch ist es möglich, das Sensorkabel sehr einfach durch Aufsetzen der magnetischen Haltemittel an der Reaktorwand zu befestigen und einen guten thermischen Kontakt herzustellen.

Es besteht weiterhin die Möglichkeit, dass die Vorrichtung mindestens zwei Lichtleitfasern umfasst. Durch die Verwendung zweier Lichtleitfasern bietet die Vorrichtung eine hohe Ausfallsicherheit für den Bruch einer Lichtleitfaser.

Es kann insbesondere vorgesehen sein, dass die Auswertemittel mindestens zwei Auswerteeinheiten umfassen, wobei eine jede der Auswerteeinheiten mit einer der Lichtleitfasern verbunden ist, um das aus dieser Lichtleitfaser ausgekoppelte Licht auszuwerten. Dadurch wird die Vorrichtung vollständig redundant und bietet auch für den Ausfall einer Auswerteeinheit eine hohe Ausfallsicherheit.

Es kann dabei vorgesehen sein, dass die mindestens zwei Lichtleitfasern in dem gleichen Sensorkabel angeordnet sind. Dies gewährleistet, dass die beiden Lichtleitfasern nahe beieinander angeordnet sind und dass daher bei dem Ausfall einer der beiden Lichtleitfasern die andere vergleichbare Messwerte liefert.

Es besteht weiterhin die Möglichkeit, dass jede der Lichtleitfasern beidseitig mit den Auswertemitteln und/oder der mindestens einen Laserlichtquelle verbunden ist. Die Kombination von zwei Lichtleitfasern und einer Double-ended-Messung bietet für die Temperaturüberwachung von Hochtemperaturanlagen den Vorteil, dass im Falle eines Faserbruchs weiter die gesamte Anlage überwacht werden kann. Weiterhin kann dadurch eine automatische Nachkalibration der Temperaturmessung im Falle einer Faseralterung, wie beispielsweise der Zunahme der differentiellen Dämpfung der für die Messung verwendeten Wellenlänge oder der Wellenlängen des Laserlichts unter dem Einfluss der hohen Temperaturen, erfolgen.

Es kann weiterhin vorgesehen sein, dass die Vorrichtung Kontrollmittel umfasst, wobei eine jede der Auswerteeinheiten mit den Kontrollmitteln verbunden ist. Die Kontrollmittel können insbesondere die Funktion der Auswerteeinheiten überwachen und damit gewährleisten, dass der Ausfall einer Auswerteeinheit sicher erkannt wird.

Die Erfindung wird unter Bezugnahme auf die beiliegenden Abbildungen näher beschrieben. Es zeigt:
- Fig. 1: eine schematische Ansicht einer erfindungsgemäßen Vorrichtung;
- Fig. 2: eine schematische Seitenansicht einer ersten Ausführungsform von magnetischen Haltemitteln einer erfindungsgemäßen Vorrichtung;
- Fig. 3: eine Untenansicht der magnetischen Haltemittel gemäß Fig. 2;
- Fig. 4: eine schematische Seitenansicht einer zweiten Ausführungsform von magnetischen Haltemitteln einer erfindungsgemäßen Vorrichtung;
- Fig. 5: eine Untenansicht der magnetischen Haltemittel gemäß Fig. 4.

In den Figuren sind gleiche oder funktional gleiche Teile mit gleichen Bezugszeichen versehen.

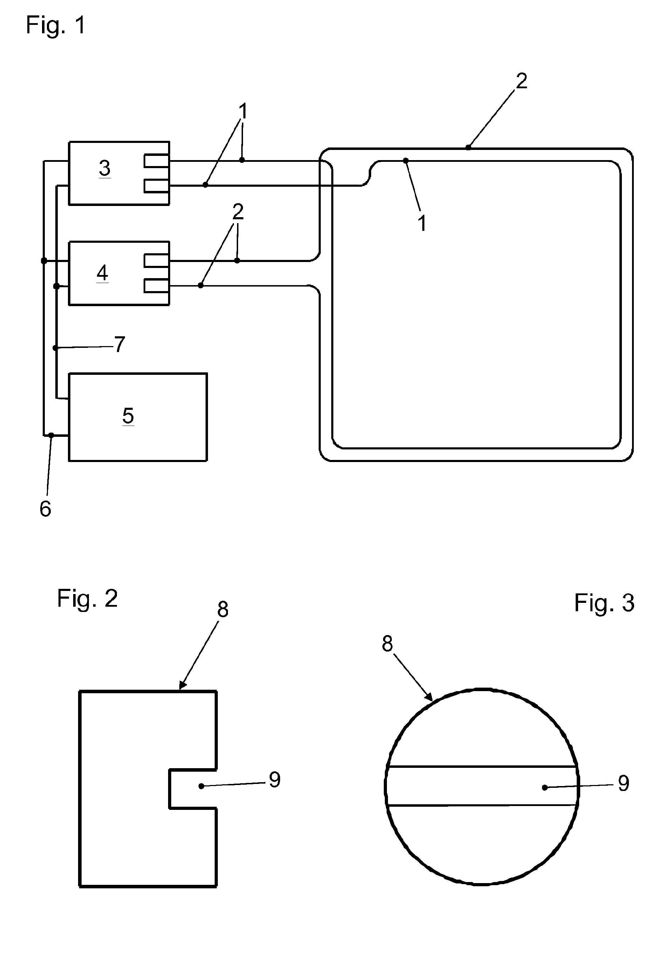

Die in Fig. 1 abgebildete Ausführungsform einer erfindungsgemäßen Vorrichtung umfasst zwei Lichtleitfasern 1, 2, die zusammen in einem nicht abgebildeten Sensorkabel angeordnet sind. Das Sensorkabel mit den beiden Lichtleitfasern 1, 2 wird in Schleifen oder mäanderförmig oder spiralförmig um einen nicht abgebildeten Reaktor herum angeordnet, wobei sich das Sensorkabel möglichst dicht an der Oberfläche des Reaktors befindet.

Es besteht durchaus die Möglichkeit, mehr als zwei Lichtleitfasern in dem Sensorkabel vorzusehen.

Weiterhin besteht die Möglichkeit, Verbindungselemente wie Spleißboxen oder Stecker zwischen Teillängen des Sensorkabels vorzusehen.

Bei dem Sensorkabel kann es sich um ein temperatur- und/oder korrosionsbeständiges Sensorkabel handeln. Beispielsweise können Hochtemperaturlichtleiter (Glasfaser mit Polyimid- oder anderer temperaturbeständiger Beschichtung) in einem korrosionsfesten Metallröhrchen (Edelstahl oder Nickellegierungen) verwendet werden. Zur Erhöhung der mechanischen Belastbarkeit (insbesondere Knickschutz) kann das Metallröhrchen doppellagig ausgeführt (Tubein-tube Design) oder mit korrosionsfesten Drähten umseilt sein.

Die in Fig. 1 abgebildete Ausführungsform der Vorrichtung umfasst weiterhin Auswertemittel mit zwei Auswerteeinheiten 3, 4, an denen jeweils eine der Lichtleitfasern 1, 2 angeschlossen ist. Dabei sind jeweils beide Enden der entsprechenden Lichtleitfaser 1, 2 mit der zugehörigen Auswerteeinheit 3, 4 verbunden. Im abgebildeten Ausführungsbeispiel sind die beiden Enden der ersten Lichtleitfaser 1 an der ersten Auswerteeinheit 3 und die beiden Enden der zweiten Lichtleitfaser 2 an der zweiten Auswerteeinheit 4 angeschlossen.

Es besteht durchaus die Möglichkeit, mehr als zwei Auswerteeinheiten vorzusehen.

Die Messung jeder Lichtleitfaser 1, 2 erfolgt also von beiden Seiten (double-ended). Vermittels der Auswerteeinheiten 3, 4 werden verteilte (bzw. quasi-verteilte) Messungen physikalischer Größen in den Lichtleitfasern 1, 2 bei gleichzeitig hoher Ortsauflösung von beispielsweise einem Meter oder weniger vorgenommen. Dabei können die Lichtleitfasern 1, 2 Längen von bis zu mehreren Kilometern aufweisen. Als Messmethoden bieten sich beispielsweise DTS (Distributed Temperature Sensing), DTSS (Distributed Temperature and Strain Sensing) oder FGB (Sensing Fibre Bragg Grating) an.

Es kann insbesondere vorgesehen sein, dass die beiden Auswerteeinheiten 3, 4 die Lichtleitfasern 1, 2 unabhängig voneinander auswerten. Dadurch und auch durch die Messung von beiden Seiten (double-ended) kann beispielsweise für eine Temperaturüberwachung von Hochtemperaturanlagen der Vorteil erzielt werden, dass im Falle eines Bruchs einer der beiden Lichtleitfasern 1, 2 trotzdem die gesamte Anlage weiter überwacht werden kann.

Die in Fig. 1 abgebildete Ausführungsform der Vorrichtung umfasst weiterhin Kontrollmittel 5, die über Leitungen 6, 7 mit den Auswerteeinheiten 3, 4 verbunden sind. Dabei können die Leitungen 6, 7 zur Stromversorgung der Auswerteeinheiten 3, 4 dienen und diese gleichzeitig überwachen, um auf einen Ausfall einer der Auswerteeinheiten 3, 4 reagieren zu können. Dazu können nicht abgebildete Schnittstellen zwischen den Kontrollmitteln 5 und den Auswerteeinheiten 3, 4 vorgesehen sein.

Die Vorrichtung umfasst weiterhin mindestens eine nicht abgebildete Laserlichtquelle, deren Licht im Betrieb der Vorrichtung zumindest teilweise in die Lichtleitfasern 1, 2 eingekoppelt wird. Beispielsweise kann vorgesehen sein, dass das Licht der mindestens einen Laserlichtquelle von einer oder von beiden Seiten in eine jede der Lichtleitfasern 1, 2 eingekoppelt wird. Es kann insbesondere vorgesehen sein, dass für eine jede der Lichtleitfasern 1, 2 eine separate Laserlichtquelle vorgesehen ist.

Die Auswertemittel können Strahlteiler umfassen, um in aus dem Stand der Technik bekannter Weise die aus der jeweiligen

Lichtleitfaser 1, 2 ausgekoppelten Anteile des Lichts von dem Licht der Laserlichtquelle zu separieren.

Für die Befestigung des Sensorkabels am Reaktor sieht die Ausführungsform gemäß den Fig. 2 bis Fig. 5 magnetische Haltemittel 8 vor. Diese weisen in den abgebildeten Ausführungsbeispielen eine im Wesentlichen zylindrische Form mit einem radialen Schlitz 9 auf ihrer im Betrieb der Vorrichtung der Reaktoroberfläche zugewandten Seite auf. Durch diesen Schlitz 9 kann sich in Längsrichtung des Schlitzes das Sensorkabel erstrecken.

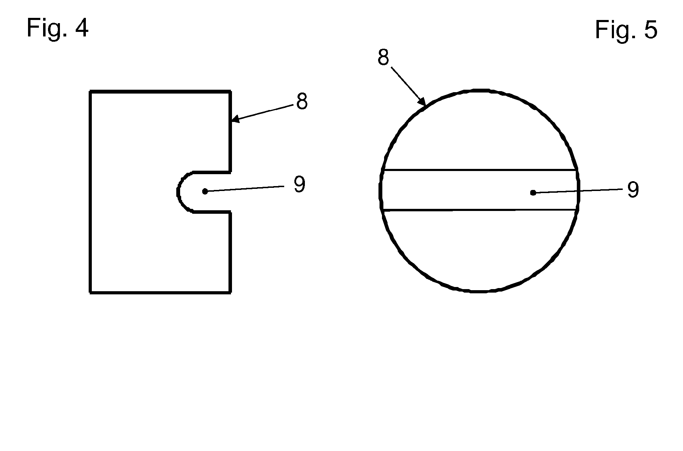

Bei der Ausführungsform gemäß Fig. 2 und Fig. 3 ist die innere Begrenzung des Schlitzes 9 rechtwinklig, wohingegen bei der Ausführungsform gemäß Fig. 4 und Fig. 5 die innere Begrenzung des Schlitzes 9 halbkreisförmig ausgestaltet ist.

Durch die geschilderte Gestaltung der magnetischen Haltemittel 8 ist es möglich, das Sensorkabel sehr einfach durch Aufsetzen der magnetischen Haltemittel 8 an der Reaktorwand zu befestigen und dabei gleichzeitig einen guten thermischen Kontakt herzustellen.

Die magnetische Haltemittel 8 können aus einer korrosionsbeständigen Metalllegierung hergestellt sein, die auch bei hohen Temperaturen magnetisch bleibt. Insbesondere enthält die Legierung Kobalt und Aluminium, Nickel, Kupfer, Titan, Samarium oder Eisen. Beispielsweise können magnetischen Haltemittel 8 aus AlNiCo-Magneten bis etwa 400°C oder aus SmCo-Magneten bis etwa 300°C magnetisch bleiben. Es besteht auch die Möglichkeit, eine korrosionsfeste Beschichtung wie beispielsweise Nickel oder Zink vorzusehen. Bei geringeren Temperaturanforderungen von beispielsweise höchstens 200°C können auch gesinterte NdFeB-Magnete eingesetzt werden.

Es besteht weiterhin die Möglichkeit, bei den magnetischen Haltemitteln 8 eine dauerhaft hohe Haftkraft und hohe Beständigkeit gegen Entmagnetisierung bei gleichzeitig geringer Bauhöhe durch ein U-förmiges Magnet-Design mit einer magnetischen Rückflussplatte zu erreichen. Diese nicht abgebildete Rückflussplatte könnte beispielsweise aus magnetischem Edelstahl bestehen.

## Patentansprüche

1. Vorrichtung für die Überwachung einer Reaktoroberfläche, umfassend
- mindestens ein Sensorkabel (10), das im Betrieb der Vorrichtung zumindest abschnittsweise im Bereich der Reaktoroberfläche angeordnet sein kann;
- mindestens eine Lichtleitfaser (1, 2), die in dem mindestens einen Sensorkabel (10) angeordnet ist;
- mindestens eine Laserlichtquelle, deren Licht im Betrieb der Vorrichtung zumindest teilweise in die mindestens eine Lichtleitfaser (1, 2) eingekoppelt wird;
- Auswertemittel, in denen im Betrieb der Vorrichtung aus der mindestens einen Lichtleitfaser (1, 2) ausgekoppelte Anteile des Lichts ausgewertet werden, um zumindest Teile der Reaktoroberfläche hinsichtlich mindestens einer physikalischen Größe ortsaufgelöst zu überwachen;
**dadurch gekennzeichnet, dass** die Vorrichtung magnetische Haltemittel (8) für die Anbringung des mindestens einen Sensorkabels (10) an der Reaktoroberfläche umfasst, wobei die Haltemittel (8) auf ihrer im Betrieb der Vorrichtung der Reaktoroberfläche zugewandten Seite einen Schlitz (9) für die Aufnahme des mindestens einen Sensorkabels (10) aufweisen.

2. Vorrichtung nach Anspruch 1, **dadurch gekennzeichnet, dass** die Vorrichtung mindestens zwei Lichtleitfasern (1, 2) umfasst.

3. Vorrichtung nach Anspruch 2, **dadurch gekennzeichnet, dass** die Auswertemittel mindestens zwei Auswerteeinheiten (3, 4) umfassen, wobei eine jede der Auswerteeinheiten (3, 4) mit einer der Lichtleitfasern (1, 2) verbunden ist, um das aus dieser Lichtleitfaser (1, 2) ausgekoppelte Licht auszuwerten.

4. Vorrichtung nach einem der Ansprüche 2 oder 3, **dadurch gekennzeichnet, dass** die mindestens zwei Lichtleitfasern (1, 2) in dem gleichen Sensorkabel (10) angeordnet sind.

5. Vorrichtung nach einem der Ansprüche 2 bis 4, **dadurch gekennzeichnet, dass** jede der Lichtleitfasern (1, 2) beidseitig mit den Auswertemitteln und/oder der mindestens einen Laserlichtquelle verbunden ist.

6. Vorrichtung nach einem der Ansprüche 3 bis 5, **dadurch gekennzeichnet, dass** die Vorrichtung Kontrollmittel (5) umfasst, wobei eine jede der Auswerteeinheiten (3, 4) mit den Kontrollmitteln (5) verbunden ist.

7. Vorrichtung nach einem der Ansprüche 1 bis 6, **dadurch gekennzeichnet, dass** die überwachte physikalische Größe die Temperatur oder die Dehnung der Lichtleitfasern (1, 2) ist.

## Claims

1. Device for monitoring a reactor surface, comprising
- at least one sensor cable (10) which, at least in sections, can be arranged in the region of the reactor surface during the operation of the device;
- at least one optical fibre (1, 2) which is arranged in the at least one sensor cable (10);
- at least one laser light source, the light of which can be coupled at least in part into the at least one optical fibre (1, 2) during the operation of the device;
- evaluation means, in which components of the light decoupled from the at least one optical fibre (1, 2) during the operation of the device are evaluated in order to monitor at least parts of the reactor surface in a spatially resolved manner in respect of at least one physical variable;
**characterized in that** the device comprises magnetic holding means (8) for attaching the at least one sensor cable (10) to the reactor surface, wherein the holding means (8), on the side thereof facing the reactor surface during the operation of the device, have a slit (9) for accommodating the at least one sensor cable (10).

2. Device according to Claim 1, **characterized in that** the device comprises at least two optical fibres (1, 2).

3. Device according to Claim 2, **characterized in that** the evaluation means comprise at least two evaluation units (3, 4), wherein each evaluation unit (3, 4) is connected to one of the optical fibres (1, 2) in order to evaluate the light decoupled from this optical fibre (1, 2).

4. Device according to either of Claims 2 and 3, **characterized in that** the at least two optical fibres (1, 2) are arranged in the same sensor cable (10).

5. Device according to one of Claims 2 to 4, **characterized in that** each optical fibre (1, 2) is connected to the evaluation means and/or the at least one laser light source on both sides.

6. Device according to one of Claims 3 to 5, **characterized in that** the device comprises inspection means (5), wherein each evaluation unit (3, 4) is connected to the inspection means (5).

7. Device according to one of Claims 1 to 6, **characterized in that** the monitored physical variable is the temperature or the expansion of the optical fibres (1, 2).

## Revendications

1. Dispositif pour la surveillance d'une surface de réacteur, comprenant :
- au moins un câble de capteur (10) lequel, lors du fonctionnement du dispositif, peut être disposé au moins partiellement dans la zone de la surface de réacteur ;
- au moins une fibre optique (1, 2) qui est disposée dans l'au moins un câble de capteur (10) ;
- au moins une source de lumière laser dont la lumière, lors du fonctionnement du dispositif, est couplée au moins partiellement dans l'au moins une fibre optique (1, 2) ;
- des moyens d'évaluation dans lesquels, lors du fonctionnement du dispositif, des fractions de lumière découplées à partir de l'au moins une fibre optique (1, 2) sont évaluées pour surveiller au moins des parties de la surface de réacteur concernant au moins une grandeur physique de façon spatialement résolue ;
**caractérisé en ce que**
le dispositif comprend des moyens de retenue magnétiques (8) pour la mise en place de l'au moins un câble de capteur (10) sur la surface de réacteur, dans lequel les moyens de retenue (8) présentent, sur leur côté tourné vers la surface de réacteur lors du fonctionnement du dispositif, une fente (9) pour la réception de l'au moins un câble de capteur (10).

2. Dispositif selon la revendication 1, **caractérisé en ce que** le dispositif comprend au moins deux fibres optiques (1, 2).

3. Dispositif selon la revendication 2, **caractérisé en ce que** les moyens d'évaluation comprennent au moins deux unités d'évaluation (3, 4), dans lequel chacune des unités d'évaluation (3, 4) est reliée à l'une des fibres optiques (1, 2) pour évaluer la lumière découplée à partir de cette fibre optique (1, 2).

4. Dispositif selon l'une des revendications 2 ou 3, **caractérisé en ce que** ces au moins deux fibres optiques (1, 2) sont disposées dans le même câble de capteur (10).

5. Dispositif selon l'une des revendications 2 à 4, **caractérisé en ce que** chacune des fibres optiques (1, 2) est reliée des deux côtés aux moyens d'évaluation et/ou à l'au moins une source de lumière laser.

6. Dispositif selon l'une des revendications 3 à 5, **caractérisé en ce que** le dispositif comprend des moyens de contrôle (5), dans lequel chacune des unités d'évaluation (3, 4) est reliée aux moyens de contrôle (5).

7. Dispositif selon l'une des revendications 1 à 6, **caractérisé en ce que** la grandeur physique surveillée est la température ou la dilatation des fibres optiques (1, 2).
